# EUROPEAN PATENT SPECIFICATION

(11) **EP 4 382 186 B1**
(45) Date of publication and mention of the grant of the patent: **26.03.2025**
(21) Application number: 23209586.9
(22) Date of filing: 14.11.2023
(51) Int. Cl.: B01D 33/21, B01D 33/23

(54) **FILTER SECTOR ASSEMBLY OF A DISC FILTER**
FILTERSEKTORANORDNUNG EINES SCHEIBENFILTERS
ENSEMBLE SECTEUR DE FILTRE D'UN FILTRE À DISQUES

(30) Priority: 09.12.2022 FI 20226090
(43) Date of publication of application: 12.06.2024
(73) Proprietor: Valmet Technologies Oy, 02150 Espoo (FI)
(72) Inventor: LAAKSO, Janne, 33700 Tampere (FI)
(74) Representative: Berggren Oy

(56) References cited:
- WO-A1-2016/024909
- CN-A- 102 266 688
- CN-U- 201 586 431
- US-A- 5 258 120

## Description

### Technical field

The present invention relates to filter sectors for filtering fluid and solid mixtures, especially in connection with pulp and fiber web production. More especially the invention relates to a filter sector assembly according to the preamble part of claim 1.

### Background

As known from the prior art in fiber web machines, especially in paper and board machines, the fiber web is produced and treated in an assembly formed by a number of apparatuses arranged consecutively in a process line. A typical production and treatment line comprises a forming section comprising a head box and a forming unit and a press section as well as a subsequent drying section and a reel-up. The production and treatment line can further comprise other devices and sections for finishing the fiber web, for example, a size press, a calender, a coating section. The production and treatment line also comprises typically at least one winder for forming customer rolls as well as a roll packaging apparatus.

Before the head box fiber suspensions comprising recycled and/or virgin fibers are treated to be fed into the head box to be used to produce the fiber webs. A treatment system of the pulp suspensions for example comprises a pulping section, a deashing system, a detrashing system, a coarse filtering section, a centrifugal cleaning section, a fractionation section, a fine filtering system, a fiber thickening system and fiber refining systems.

The term "fiber suspensions" means liquids and suspensions, which contain fibers and other occurring ingredients, which are meant to be filtered out. The fibers usually mean recycled cellulose fibers, but also newly produced cellulose fibers can come into question.

It is known from prior art that different types of disc filters are used to separate liquid from the fiber suspensions. A disc filter typically comprises a fiber suspension containing bath, often referred as a vat, and a, typically tubular, core assembly adapted to rotate on a horizontal axis, and a plurality of filter sectors spaced along the core assembly and supported on the core assembly.

In respect of operation of the disc filter it is important that the filter sectors are properly supported and attached to the core assembly. Occasionally, there might be disturbances in operation of one or more of the filter sectors and a filter sector may also break. Thus, it is also important that the filter sectors are easy to maintain and can be easily replaced. In some known arrangements for filter sectors of disc filters, the maintaining and/or replacing the filter sectors take a rather long time, during which the disc filter cannot be operated.

In publication US5258120A is disclosed disk filter comprising: a hollow shaft having a longitudinal axis; means for rotating said hollow shaft about said longitudinal axis; a plurality of filter segments each having one end arranged circumferentially about said hollow shaft and an outer edge spaced radially outwardly of said one end and said hollow shaft, each of said filter segments having opposed first and second sides extending between said one end and said outer edge, said first and second sides being connected to define a passageway for the material to be filtered; and connecting means interposed between said one end of each filter segment and said hollow shaft for fluidly connecting said passageway to an interior of said hollow shaft, wherein said connecting means includes a first pipe telescopically nested within a second pipe and detachably secured with each other via a bayonet lock, with said first pipe being connected to said filter segment and with said second pipe being connected to said hollow shaft, wherein said first pipe has an outer surface area and includes a pin projecting radially from said outer surface area, and said second pipe is provided with an L-shaped slot engaged by said pin to form said bayonet lock.

An object of the invention is to create a filter sector assembly, in which the disadvantages and problems of prior art are eliminated or at least minimized.

In particular an object of the invention is to create an improved filter sector assembly, in particular in respect of reliable support of the filter sector to the core assembly.

In particular another object of the invention is to create an improved filter sector assembly, in particular in respect of maintenance of the filter sector.

In particular another object of the invention is to create an improved filter sector assembly, in particular in respect of replaceability of the filter sector to the core assembly.

### Summary

In order to achieve the above objects and those that will come apparent later the filter sector assembly according to the invention is mainly characterized by the features of the characterizing part of the independent claim 1. Advantageous aspects and features of the invention are presented in the dependent claims.

According to the invention the filter sector assembly of a disc filter, which disc filter comprises a fiber suspension containing bath, a filter sector assembly rotatably supported with relation to the bath, a core assembly adapted to rotate on a horizontal axis, and a plurality of filter sectors spaced along the core assembly and supported on the core assembly, comprises two adjacent filter sectors and a support plate, and the two adjacent filter sectors are attached as a pair of filter sectors by the support plate to the core assembly of the disc filter.

According to an advantageous feature of the invention the support plate comprises re-openable and re-fastenable attachment means configured to provide fastening between the filter sectors of the filter sector assembly and the core assembly of the disc filter.

According to the invention a plurality of the filter sector assemblies, each formed of two adjacent filter sectors supported on the same support plate, are attached on the core assembly of the disc filter.

According to an advantageous feature of the invention at each outer side of the two adjacent filter sectors supported on the same support plate a vertical reinforce rib is located configured to give further vertical support and sturdiness to the filter sector assembly.

According to an advantageous feature of the invention between the two adjacent filter sectors supported on the same support plate in the filter sector assembly of the pair of the two adjacent filter sectors a spacer plate is located configured to ensure correct distance between the two adjacent filter sectors of the filter sector assembly.

According to an advantageous feature of the invention along top ends of the filter sectors a retainer ring is attached to fasten the top ends of the filter sectors to each other.

According to an advantageous feature of the invention each filter sector comprises a filtering part and round the filtering part mount frame parts configured to support the filtering part of the filter sector.

According to the invention each filter sector comprises a funnel part mounted on the bottom end of the filter sector configured to support and mount the filter sector.

According to the invention the funnel part comprises a sector shaped base part and the bottom end of the base part is attached to a support panel and on each side of the base part a side panel is located to configured to provide robustness to the funnel part.

According to an advantageous feature of the invention the support panels of the funnel parts of two adjacent filter sectors are attached to the same support plate, which attach the filter sector assembly formed of the two adjacent filter sectors to the core assembly.

The term "fiber suspensions" means liquids and suspensions, which contain fibers and other occurring ingredients, which are meant to be filtered out. The fibers usually mean recycled cellulose fibers, but also newly produced cellulose fibers can come into question. In this description and the claims terms "top", "bottom" is to be interpreted in view of the disc filter such, that the top indicates to outer part of the disc filter and the bottom indicates to inner part of the disc filter.

By the invention and its advantageous features several advantages are achieved: Reliable support of the filter sectors to the core assembly is achieved by the sturdy support plate supporting two adjacent filter sectors. The attachment means of the support plate provide easy and fast replacing of the filter sectors and easy maintenance of the filter sectors. Thus, also higher strength of the filter sectors during operation of the disc filter are achieved and further better safety for operators is provided.

### Brief description of the drawings

Aspects of the invention, however, together with additional objects and advantages thereof, will be best understood from the following description of some example embodiments when read in connection with the accompanying drawings and in the following the invention is described in more detail referring to the accompanying drawing, in which
In figure 1 is schematically shown an advantageous example of a filter sector as a schematical assembly drawing.
In figure 2 is very schematically shown an advantageous example of fastening of two adjacent filter sectors by a support plate of a filter sector assembly according to the invention.
In figure 3 is very schematically shown another advantageous example of fastening of two adjacent filter sectors by a support plate of a filter sector assembly according to the invention.
In figure 4 is very schematically shown an advantageous example of a support plate of a filter sector assembly according to the invention.

### Detailed description

During the course of this description like numbers and signs will be used to identify like elements according to the different views which illustrate the invention. Repetition of some reference signs may have been omitted in the figures for clarity reasons.

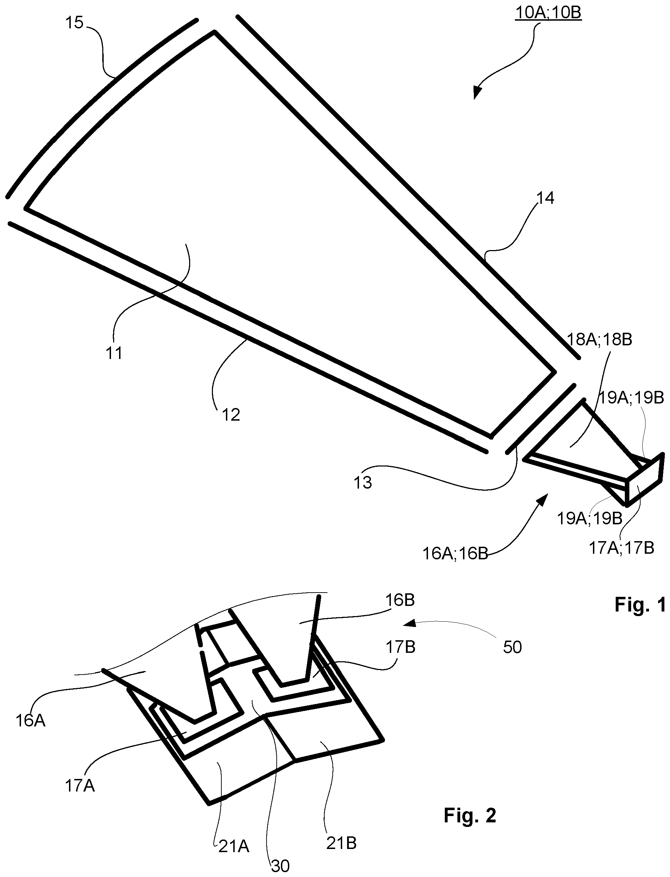

In figure 1 is schematically shown an example of a filter sector 10A; 10B comprising a filtering part 11, which is sector shaped. Around the filtering part 11 frame parts 12, 13, 14, 15 are located to be mounted around the filtering part 11 to support the filtering part 11 of the filter sector 10A, 10B. The frame parts comprise two side support bars 12, 14, a bottom support bar 13 and a slightly curved top support bar 15. The filter sector 10A; 10B also comprises a funnel part 16A; 16B, which is to be mounted on the bottom end of the filter sector 10A; 10B to support and to mount the filter sector 10A; 10B. The funnel part 16A; 16B comprises a sector shaped base part 18A; 18B. The bottom end of the base part 18A; 18B is attached to a support panel 17A; 17B, which is substantially rectangular. On each side of the base part 18A, 18B a side panel 19A; 19B is located to provide robustness to the funnel part 16A; 16B.

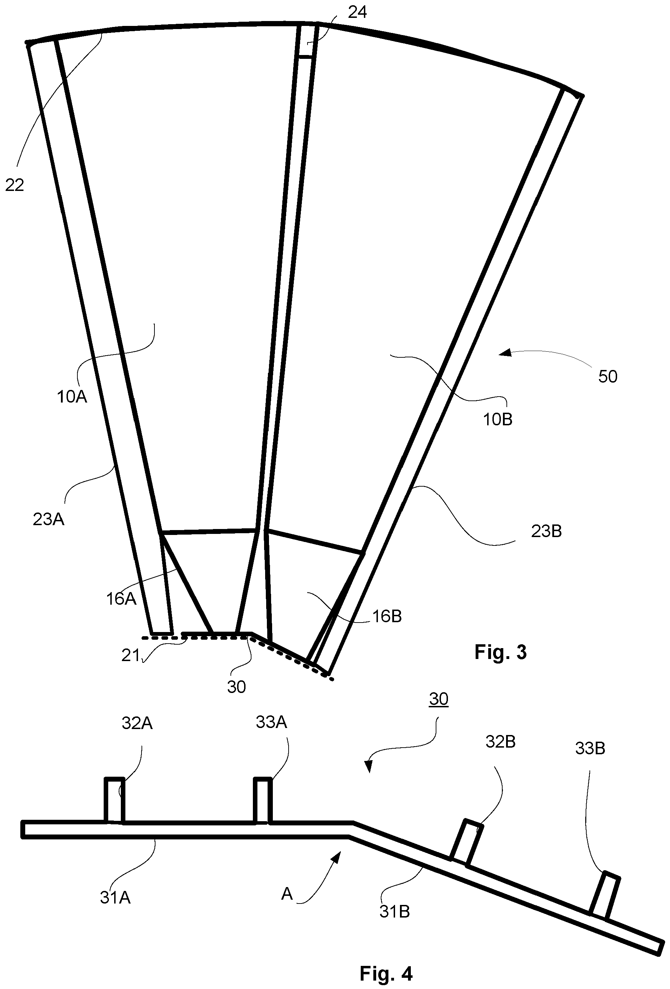

In figure 2 is very schematically shown an advantageous example of fastening of two adjacent filter sectors 10A, 10B by a support plate 30 of a filter sector assembly 50 formed of two adjacent filter sectors 10A, 10B. In figure 2 only funnel parts 16A,16B with support panels 17A, 17B, correspondingly, of two adjacent filter sectors 10A, 10B are shown. As shown in the figure 2 the support panels 17A, 17B of the funnel parts 16A, 16 of two adjacent filter sectors 10A, 10B are attached to the support plate 30, which attach the two adjacent filter sectors 10A, 10B to the outer surface parts 21A, 21B of a tubular core of a core assembly of a disc filter. In this example the tubular core of the core assembly of the disc filter is formed of an angular structure. The support panels 17A, 17B of the funnel parts 16A, 16 of two adjacent filter sectors 10A, 10B are attached to the support plate 30 by re-openable and re-fastenable attachment means such as screws 32A, 33A, 32B, 33B (fig. 4). The funnel parts 16A, 16B respective attachment openings for the attachment means 32A, 33A, 32B, 33B (fig. 4). In the figure 2 only two of the filter sectors 10A, 10B are shown, but it is to be understood that advantageously all filter sectors of the disc filter are attached as pairs of two adjacent filter sectors 10A, 10B by support plates 30 around outer surface of the of the disc filter by re-openable and re-fastenable attachment means (not shown). The disc filter comprises a plurality of filter sector assemblies 50, each formed of two adjacent filter sectors 10A, 10B supported on the same support plate 30. Thus, reliable support of the two adjacent filter sectors 10A, 10B to the core assembly is achieved by the sturdy support plate 30 supporting the two adjacent filter sectors 10A, 10B. The re-openable and re-fastenable attachment means32A, 33A, 32B, 33B of the support plate 30 provide easy and fast replacing of the filter sectors 10A, 10B and easy maintenance of the filter sectors 10A, 10B. Thus, also higher strength of the filter sectors 10A, 10B during operation of the disc filter are achieved and further better safety for operators is provided.

In figure 3 is very schematically shown another advantageous example of fastening of two adjacent filter sectors 10A, 10B by a support plate 30 of a filter sector assembly 50 formed of two adjacent filter sectors 10A, 10B. In figure 2 only funnel parts 16A, 16B, correspondingly, of two adjacent filter sectors 10A, 10B are shown. As shown in the figure 3 the funnel parts 16A, 16 of two adjacent filter sectors 10A, 10B are attached to the support plate 30, which attach the two adjacent filter sectors 10A, 10B to the outer surface 21 of the tubular core of the core assembly of the disc filter. In this example the tubular core of the core assembly of the disc filter is formed of an angular structure. The funnel parts 16A, 16 of two adjacent filter sectors 10A, 10B are attached to the support plate 30 by re-openable and re-fastenable attachment means such as screws 32A, 33A, 32B, 33B (fig. 4). The funnel parts 16A, 16B respective attachment openings for the attachment means 32A, 33A, 32B, 33B (fig. 4). In the figure 3 only two of the filter sectors 10A, 10B are shown, but it is to be understood that advantageously all filter sectors of the disc filter are attached as pairs of two adjacent filter sectors 10A, 10B by support plates 30 around outer surface of the of the disc filter by re-openable and re-fastenable attachment means (not shown). The disc filter comprises a plurality of filter sector assemblies 50, each formed of two adjacent filter sectors 10A, 10B supported on the same support plate 30. Between the two adjacent filter sectors 10A, 10B in the filter sector assembly of the pair of the two adjacent filter sectors 10A, 10B a spacer plate 24 can be located to ensure the correct distance between the two adjacent filter sectors 10A, 10B. At each outer side of the two adjacent filter sectors 10A, 10B a vertical reinforce rib 23A, 23B is located to give further vertical support and sturdiness to the filter sector assembly 50. Also, along the top ends of the filter sectors 10A, 10B a retainer ring 22 is attached to fasten the top ends of the filter sectors 10A, 10B to each other and the top ends of the filter sectors 10A, 10B of the filter sector assemblies 50 of the disc filter to each other. Thus, reliable support of the two adjacent filter sectors 10A, 10B to the core assembly is achieved by the sturdy support plate 30 supporting the two adjacent filter sectors 10A, 10B. The re-openable and re-fastenable attachment means 32A, 33A, 32B, 33B of the support plate 30 provide easy and fast replacing of the filter sectors 10A, 10B and easy maintenance of the filter sectors 10A, 10B. Thus, also higher strength of the filter sectors 10A, 10B during operation of the disc filter are achieved and further better safety for operators is provided.

In figure 4 is very schematically shown an advantageous example of a support plate 30 of a filter sector assembly 50. One support plate 30 is used to attach two adjacent filter sectors 10A, 10B (figs. 2-3) to the outer surface of the core assembly of the disc filter. The support plate 30 comprises re-openable and re-fastenable attachment means such as screws 32A, 33A, 32B, 33B to provide fastening between the support panels 17A, 17B of the funnel parts 16A, 16B of the filter sectors 10A, 10B of the filter sector assembly 50 and the core assembly of the disc filter. In figure 4 the support plate 30 is shown as a side view and it is to be understood that there may be more than one re-openable and re-fastenable attachment means such as screws 32A, 33A, 32B, 33B in dept direction of the figure 4. The support plate 30 of the example of the figure 4 is provided for angular outer surface of the tubular core of the core assembly and thus it comprises sections 31A, 31B in angle A corresponding with the outer surface angles of the tubular core of the core assembly or in an angle A slightly degrees less than the angles of the tubular core of the core assembly.

In the description in the foregoing, although some functions have been described with reference to certain features, those functions may be performable by other features whether described or not. Although features have been described with reference to certain embodiments or examples, those features may also be present in other embodiments or examples whether described or not. Above the invention has been described by referring to some advantageous examples only to which the invention is not to be narrowly limited. Many modifications and alterations are possible within the invention as defined in the following claims.

## Claims

1. Filter sector assembly for a disc filter, which disc filter comprises a fiber suspension containing bath, a filter sector assembly rotatably supported with relation to the bath, a core assembly adapted to rotate on a horizontal axis, and a plurality of filter sectors spaced along the core assembly and supported on the core assembly, which filter sector assembly (50) comprises two adjacent filter sectors (10A; 10B), in which each filter sector (10A; 10B) comprises a funnel part (16A; 16B) mounted on the bottom end of the filter sector (10A; 10B) configured to support and mount the filter sector (10A; 10B), which filter sector assembly (50) comprises a support plate (30), in which the two adjacent filter sectors (10A; 10B) are attachable as a pair of filter sectors (10A; 10B) by the support plate (30) to the core assembly (21; 21A, 21B) of the disc filter and a plurality of the filter sector assemblies (50), each formed of two adjacent filter sectors (10A, 10B) supported on the same support plate (30), are attachable on the core assembly (21; 21A, 21B) of the disc filter,
**characterized in that** the funnel part (16A; 16B) comprises a sector shaped base part (18A; 18B) and that the bottom end of the base part (18A; 18B) is attached to a support panel (17A; 17B) and that on each side of the base part (18A, 18B) a side panel (19A; 19B) is located which is configured to provide robustness to the funnel part (16A; 16B).

2. Filter sector assembly according to claim 1, **characterized in that** the support plate (30) comprises re-openable and re-fastenable attachment means (32A, 33A, 32B, 33B) configured to provide fastening between the filter sectors (10A, 10B) of the filter sector assembly (50) and the core assembly (21; 21A, 21B) of the disc filter.

3. Filter sector assembly according to any of the previous claims,
**characterized in that** at each outer side of the two adjacent filter sectors (10A, 10B) supported on the same support plate (30) a vertical reinforce rib (23A, 23B) is located configured to give further vertical support and sturdiness to the filter sector assembly (50).

4. Filter sector assembly according to any of the previous claims,
**characterized in that** between the two adjacent filter sectors (10A, 10B) supported on the same support plate (30) in the filter sector assembly (50) of the pair of the two adjacent filter sectors (10A, 10B) a spacer plate (24) is located configured to ensure correct distance between the two adjacent filter sectors (10A, 10B) of the filter sector assembly (50).

5. Filter sector assembly according to any of the previous claims,
**characterized in that** along top ends of the filter sectors (10A, 10B) a retainer ring (22) is attached to fasten the top ends of the filter sectors (10A, 10B) to each other.

6. Filter sector assembly according to any of the previous claims,
**characterized in that** each filter sector (10A; 10B) comprises a filtering part (11) and round the filtering part (11) mount frame parts (12, 13, 14, 15) configured to support the filtering part (11) of the filter sector (10A, 10B).

7. Filter sector assembly according to any of the previous claims,
**characterized in that** the support panels (17A, 17B) of the funnel parts (16A, 16) of two adjacent filter sectors (10A, 10B) are attached to the same support plate (30), which attach the filter sector assembly (50) formed of the two adjacent filter sectors (10A, 10B) to the core assembly (21; 21A, 21B).

## Patentansprüche

1. Filtersektoranordnung für einen Scheibenfilter, wobei der Scheibenfilter ein Bad mit einer Fasersuspension, eine Filtersektoranordnung, die in Bezug auf das Bad drehbar gelagert ist, eine Kernanordnung, die so ausgebildet ist, dass sie sich um eine horizontale Achse dreht, und eine Vielzahl von Filtersektoren umfasst, die entlang der Kernanordnung beabstandet sind und auf der Kernanordnung gelagert sind, wobei die Filtersektoranordnung (50) zwei benachbarte Filtersektoren (10A; 10B) umfasst, wobei jeder Filtersektor (10A; 10B) einen Trichterteil (16A; 16B) umfasst, der am unteren Ende des Filtersektors (10A; 10B) montiert ist und so ausgebildet ist, dass er den Filtersektor (10A; 10B) trägt und montiert, wobei die Filtersektoranordnung (50) eine Trägerplatte (30) umfasst, wobei die beiden benachbarten Filtersektoren (10A; 10B) als ein Filtersektorpaar (10A; 10B) durch die Trägerplatte (30) an der Kernanordnung (21; 21A, 21B) des Scheibenfilters befestigbar sind und eine Vielzahl der Filtersektoranordnungen (50), die jeweils aus zwei benachbarten Filtersektoren (10A, 10B) bestehen, die auf derselben Trägerplatte (30) gelagert sind, an der Kernanordnung (21; 21A, 21B) des Scheibenfilters befestigbar sind,
**dadurch gekennzeichnet, dass** der Trichterteil (16A; 16B) einen sektorförmigen Basisteil (18A; 18B) umfasst und dass das untere Ende des Basisteils (18A; 18B) an einer Trägertafel (17A; 17B) befestigt ist und dass sich auf jeder Seite des Basisteils (18A, 18B) eine Seitenplatte (19A; 19B) befindet, die so konfiguriert ist, dass sie dem Trichterteil (16A; 16B) Stabilität verleiht.

2. Filtersektoranordnung nach Anspruch 1, **dadurch gekennzeichnet, dass** die Trägerplatte (30) wieder öffenbare und wieder befestigbare Befestigungsmittel (32A, 33A, 32B, 33B) umfasst, die dazu ausgebildet sind, eine Befestigung zwischen den Filtersektoren (10A, 10B) der Filtersektoranordnung (50) und der Kernanordnung (21; 21A, 21B) des Scheibenfilters bereitzustellen.

3. Filtersektoranordnung nach einem der vorhergehenden Ansprüche, **dadurch gekennzeichnet, dass** sich an jeder Außenseite der beiden benachbarten Filtersektoren (10A, 10B), die auf derselben Trägerplatte (30) getragen werden, eine vertikale Verstärkungsrippe (23A, 23B) befindet, die dazu konfiguriert ist, der Filtersektoranordnung (50) weitere vertikale Unterstützung und Stabilität zu verleihen.

4. Filtersektoranordnung nach einem der vorhergehenden Ansprüche, **dadurch gekennzeichnet, dass** zwischen den beiden benachbarten Filtersektoren (10A, 10B), die auf derselben Trägerplatte (30) in der Filtersektoranordnung (50) des Paars aus zwei benachbarten Filtersektoren (10A, 10B) getragen werden, eine Distanzplatte (24) angeordnet ist, die so konfiguriert ist, dass sie den richtigen Abstand zwischen den beiden benachbarten Filtersektoren (10A, 10B) der Filtersektoranordnung (50) gewährleistet.

5. Filtersektoranordnung nach einem der vorhergehenden Ansprüche, **dadurch gekennzeichnet, dass** entlang der oberen Enden der Filtersektoren (10A, 10B) ein Haltering (22) angebracht ist, um die oberen Enden der Filtersektoren (10A, 10B) aneinander zu befestigen.

6. Filtersektoranordnung nach einem der vorhergehenden Ansprüche, **dadurch gekennzeichnet, dass** jeder Filtersektor (10A; 10B) einen Filterteil (11) umfasst und um den Filterteil (11) herum Rahmenteile (12, 13, 14, 15) angebracht sind, die so konfiguriert sind, dass sie den Filterteil (11) des Filtersektors (10A, 10B) tragen.

7. Filtersektoranordnung nach einem der vorhergehenden Ansprüche, **dadurch gekennzeichnet, dass** die Trägertafel (17A, 17B) der Trichterteile (16A, 16) zweier benachbarter Filtersektoren (10A, 10B) an derselben Trägerplatte (30) befestigt sind, die die aus den beiden benachbarten Filtersektoren (10A, 10B) gebildete Filtersektoranordnung (50) an der Kernanordnung (21; 21A, 21B) befestigt.

## Revendications

1. Ensemble secteur de filtre pour un filtre à disques, lequel filtre à disques comprend un bain contenant une suspension de fibres, un ensemble secteur de filtre supporté de manière rotative par rapport au bain, un ensemble noyau conçu pour tourner sur un axe horizontal, et une pluralité de secteurs de filtre espacés le long de l'ensemble noyau et supportés sur l'ensemble noyau, lequel ensemble secteur de filtre (50) comprend deux secteurs de filtre adjacents (10A ; 10B), dans lequel chaque secteur de filtre (10A ; 10B) comprend une partie d'entonnoir (16A ; 16B) montée sur l'extrémité inférieure du secteur de filtre (10A ; 10B) configurée pour supporter et monter le secteur de filtre (10A ; 10B), lequel ensemble secteur de filtre (50) comprend une plaque de support (30), dans laquelle les deux secteurs de filtre adjacents (10A ; 10B) peuvent être fixés en tant que paire de secteurs de filtre (10A ; 10B) par la plaque de support (30) à l'ensemble noyau (21 ; 21 A, 21B) du filtre à disques et une pluralité d'ensembles secteurs de filtre (50), chacun formé de deux secteurs de filtre adjacents (10A, 10B) supportés sur la même plaque de support (30), peuvent être fixés sur l'ensemble noyau (21 ; 21A, 21B) du filtre à disques,
**caractérisé en ce que** la partie d'entonnoir (16A ; 16B) comprend une partie de base en forme de secteur (18A ; 18B) et que l'extrémité inférieure de la partie de base (18A ; 18B) est fixée à un panneau de support (17A ; 17B) et que de chaque côté de la partie de base (18A, 18B) se trouve un panneau latéral (19A ; 19B) qui est configuré pour fournir une robustesse à la partie d'entonnoir (16A ; 16B).

2. Ensemble secteur de filtre selon la revendication 1,
**caractérisé en ce que** la plaque de support (30) comprend des moyens de fixation (32A, 33A, 32B, 33B), pouvant être ouverts et fixés, configurés pour assurer la fixation entre les secteurs de filtre (10A, 10B) de l'ensemble secteur de filtre (50) et l'ensemble noyau (21 ; 21A, 21B) du filtre à disques.

3. Ensemble secteur de filtre selon l'une quelconque des revendications précédentes, **caractérisé en ce que** sur chaque côté extérieur des deux secteurs de filtre adjacents (10A, 10B) supportés sur la même plaque de support (30) se trouve une nervure de renforcement verticale (23A, 23B) configurée pour donner un support vertical et une robustesse supplémentaires à l'ensemble secteur de filtre (50).

4. Ensemble secteur de filtre selon l'une quelconque des revendications précédentes, **caractérisé en ce qu'**entre les deux secteurs de filtre adjacents (10A, 10B) supportés sur la même plaque de support (30) dans l'ensemble secteur de filtre (50) de la paire des deux secteurs de filtre adjacents (10A, 10B) se trouve une plaque d'espacement (24) configurée pour assurer une distance correcte entre les deux secteurs de filtre adjacents (10A, 10B) de l'ensemble secteur de filtre (50).

5. Ensemble secteur de filtre selon l'une quelconque des revendications précédentes, **caractérisé en ce que** le long des extrémités supérieures des secteurs de filtre (10A, 10B) une bague de retenue (22) est fixée pour fixer les extrémités supérieures des secteurs de filtre (10A, 10B) l'une à l'autre.

6. Ensemble secteur de filtre selon l'une quelconque des revendications précédentes, **caractérisé en ce que** chaque secteur de filtre (10A ; 10B) comprend une partie filtrante (11) et autour de la partie filtrante (11) sont montées des parties de cadre (12, 13, 14, 15) configurées pour supporter la partie filtrante (11) du secteur de filtre (10A, 10B).

7. Ensemble secteur de filtre selon l'une quelconque des revendications précédentes, **caractérisé en ce que** les panneaux de support (17A, 17B) des parties d'entonnoir (16A, 16) de deux secteurs de filtre adjacents (10A, 10B) sont fixés à la même plaque de support (30), qui fixent l'ensemble secteur de filtre (50) formé des deux secteurs de filtre adjacents (10A, 10B) à l'ensemble noyau (21 ; 21A, 21B).
